# EUROPÄISCHE PATENTSCHRIFT

(11) **EP 3 839 318 B1**
(45) Veröffentlichungstag und Bekanntmachung des Hinweises auf die Patenterteilung: **10.04.2024**
(21) Anmeldenummer: 20215952.1
(22) Anmeldetag: 21.12.2020
(51) Int. Cl.: F16L 57/00, F16L 41/10, F16L 47/04, F16L 47/28, G01N 30/60, F16B 35/04, F16B 35/06, F16B 31/02, F16B 21/18

(54) **SCHRAUBELEMENT UND SYSTEM**
SCREW ELEMENT AND SYSTEM
ÉLÉMENT À VIS ET SYSTÈME

(30) Priorität: 20.12.2019 DE 102019135455
(43) Veröffentlichungstag der Anmeldung: 23.06.2021
(73) Patentinhaber: Amfomed Ag, 4123 Allschwil (CH)
(72) Erfinder: Marchand, Claude, 4434 Hölstein (CH)
(74) Vertreter: Manitz Finsterwald Patent- und Rechtsanwaltspartnerschaft mbB

(56) Entgegenhaltungen:
- DE-A1-102011 106 696
- US-A1- 2013 076 030
- US-A1- 2016 193 969
- US-A1- 2016 356 408

## Beschreibung

Die vorliegende Erfindung betrifft ein Schraubelement mit einer internen Drehmomentbegrenzung zum Befestigen einer Leitung, insbesondere einer flüssigkeitsführenden Leitung, an einem Gegenstück, insbesondere an einem Geräteanschluss oder einer Kopplung für einen weitere Leitung, mit einem, vorzugsweise ein Gewinde aufweisendes, Verbindungsteil und einem Betätigungsteil. Die Erfindung betrifft ferner ein System umfassend zumindest ein Schraubelement und einer an dem Schraubelement befestigten Leitung.

Ein Schraubelement ist aus der US 2016/193969 A1 bekannt, ein weiteres Schraubelement ist aus der US 2013/076030 A1 bekannt. Schraubelemente, die der Befestigung einer Leitung an einem Gegenstück dienen, sei es an ein Verbindungsteil zu einer weiteren Leitung oder zu einem Anschluss an ein Gehäuse eines Gerätes oder einer pneumatischen oder hydraulischen Einrichtung, sind in großer Vielfalt bekannt. Bei den Anschlüssen kann es sich um Eingänge oder Ausgänge handeln. Die Leitungen können aus Metall und/oder aus Kunststoff bestehen und können starr oder flexibel sein. Die Schraubelemente können die Form von hohlen Bolzen oder Schraubmuffen haben oder als Hülsenmuttern ausgebildet werden.

Die aus Kunststoff bestehenden Leitungen werden an ihren freien Enden häufig nach außen umgebördelt, um einen Flansch zu bilden, der zugleich als Dichtung wirkt. Das Schraubelement drückt mit seiner Stirnseite meistens gegen einen Stützring, der wiederum direkt oder über eine Dichtung gegen den Flansch drückt und diesen gegen die Bodenfläche eine Anschlussbohrung presst. Insbesondere bei Kunststoffleitungen, die bspw. aus PTFE oder FEP bestehen, muss der Anpressdruck am Flansch in Grenzen gehalten werden, da sonst das Kunststoffmaterial in unerwünschter Weise zu fließen beginnt.

Insbesondere auf dem Gebiet der analytischen, präparativen oder industriellen Chromatographie, sowie auf dem Gebiet der medizinischen Diagnostik und bei Laborgeräten im Allgemeinen werden häufig relativ dünne, aber teilweise im Betrieb unter hohem Druck stehende Schläuche aus Kunststoff mittels Schraubelementen aus Kunststoff an die entsprechenden Geräte, beispielsweise an HPLC-MPLC oder LPLC-Geräte bzw. Chromatographiesäulen angeschlossen.

Dabei können eine erhebliche Anzahl von Leitungen an ein Gerät angeschlossen werden. Im Regelfall werden die Schraubelemente mit der Hand, d. h. mit den Fingern festgezogen. Es kommt aber auch vor, dass die Zugänglichkeit der Schraubelemente aufgrund der beengten Platzverhältnisse schwierig ist. Dabei kann es durchaus vorkommen, dass entsprechende Schraubelemente nur immer über kleine Winkelbereiche gedreht werden können. Es kann dann erforderlich werden, ein Werkzeug anzuwenden, um die Schraubelemente ausreichend festzuziehen.

Egal ob die Schraubelemente mit der Hand oder mit einem Werkzeug festgezogen werden, ist es notwendig, dafür Sorge zu tragen, dass die Schraubelemente ausreichend fest angezogen sind. Sie dürfen jedoch nicht so fest angezogen sein, dass das Gewinde des Schraubelements, das häufig aus Kunststoff besteht, beschädigt wird oder so fest, dass die Abdichtung des Kunststoffschlauches nicht mehr gewährleistet ist, sei es durch Verformung oder Beschädigung des Schlauches und/oder einer vorgesehenen Dichtung.

Die Aufgabe der vorliegenden Erfindung liegt daher darin, ein Schraubelement der eingangs genannten Art vorzusehen, welches auf einfache Weise ein zuverlässiges Anziehen ermöglicht und zugleich vor einem zu festen Anziehen schützt, welches einfach, zuverlässig und kostengünstig herzustellen ist.

Diese Aufgabe wird durch ein Schraubelement mit den Merkmalen des unabhängigen Anspruchs 1 gelöst. Das erfindungsgemäße Schraubelement weißt eine Drehmomentbeschränkungseinheit auf, die ein von dem Betätigungsteil auf das Verbindungsteil übertragbares Drehmoment beschränkt, wobei die Drehmomentbeschränkungseinheit zwischen dem Verbindungsteil und dem Betätigungsteil angeordnet ist und ein, aus zumindest zwei miteinander verbindbaren Beschränkungselementteilen zusammensetzbares, separates Beschränkungselement aufweist, das die Drehmomentbeschränkungseinheit in axialer Richtung einer Längsachse des Schraubelements begrenzt.

Das Verbindungsteil und das Betätigungsteil können zwar um die Längsachse des Schraubelements, insbesondere relativ zueinander, drehbar, jedoch über eine Verbindungsstelle axial miteinander verbindbar sein. Demnach kann das gesamte Schraubelement um die Längsachse gedreht werden, um beispielsweise an einen Geräteanschluss geschraubt zu werden. Durch die axiale Verbindung zum Verbindungsteil kann diese Bewegung einfach auf das Verbindungsteil übertragen werden. Die axiale Verbindung hält das Betätigungsteil und das Verbindungsteil also so lange beieinander, solange das anliegende Drehmoment einen gewissen Grenzwert nicht überschreitet. Wird dieser Grenzwert jedoch überschritten, kann sich die axiale Verbindung trennen und das Betätigungsteil kann relativ zum Verbindungsteil rotieren, sodass das Verbindungsteil keine Bewegung mehr ausführt, obwohl der Benutzer weiterhin am Betätigungsteil dreht. Der Grenzwert für das anliegende Drehmoment kann im Wesentlichen von der Drehmomentbegrenzungseinheit festgelegt sein.

Somit kann der Benutzer das Schraubelement manuell oder mit Hilfe eines Werkzeugs so weit in den Geräteanschluss drehen, solange die Drehmomentbegrenzungseinheit dies zulässt. Die Drehmomentbegrenzungseinheit verhindert dann, dass ein Schraubelement derart weiter angezogen wird, dass dieses und/oder der Anschluss beschädigt werden, indem sich beispielsweise das Betätigungsteil relativ zum Verbindungsteil dreht. Durch die interne Drehmomentbegrenzung kann verhindert werden, dass sich das Verbindungsteil weiter im Anschluss dreht und dort ein zu hohes Drehmoment erzeugt, was zu Beschädigungen der Komponenten führen kann.

Dadurch, dass die Drehmomentbeschränkungseinheit aus zumindest zwei miteinander verbindbaren Beschränkungselementen zusammensetzbar ist, ist das Schraubelement insgesamt einfacher, zuverlässiger und kostengünstiger herstellbar als vergleichbare, bekannte Schraubelemente. Die Beschränkungselemente können insbesondere separat hergestellt und erst im Anschluss an das Schraubelement angebracht werden.

Außerdem hat sich auch die Handhabung des Schraubelements durch seine Ausbildung mittels eines Verbindungsteils, eines Betätigungsteils und einer Drehmomentbeschränkungseinheit als vergleichsweise einfach herausgestellt, da ein Anwender nicht mehr unbedingt spezielle Werkzeuge braucht, um das Schraubelement an einem entsprechenden Anschluss zu befestigen. Das Schraubelement kann auch einfach manuell befestigt werden, da die Drehmomentbeschränkungseinheit dafür sorgt, dass ein gewisses Drehmoment nicht überschritten wird.

Gemäß einer ersten Ausführungsform ist das Beschränkungselement in zumindest einer am Verbindungsteil vorgesehenen Nut, bevorzugt in zwei bis sechs Nuten, besonders bevorzugt in vier Nuten, insbesondere lösbar oder unlösbar, zusammengesetzt. Eine bzw. mehrere Nuten am Verbindungsteil ermöglichen eine besonders einfache und zugleich exakte Justage und Anordnung der Drehmomentbeschränkungseinheit am Verbindungsteil, da diese lediglich in der Nut bzw. in den Nuten eingelegt bzw. befestigt werden muss. Es ist auch denkbar, dass die Nut bzw. die Nuten lediglich als Justagemittel dienen, in denen die Beschränkungsteile eingelegt werden, bevor sie aneinander befestigt und dadurch am Verbindungsteil fixiert werden. Dies kann beispielsweise der Fall sein, wenn die Beschränkungsteile umfangsseitig um das Verbindungsteil angeordnet sind.

Gemäß einer weiteren Ausführungsform ist die Drehmomentbeschränkungseinheit in dem Betätigungsteil angeordnet und das Beschränkungselement schließt das Betätigungsteil zu einer ersten Seite in der axialen Richtung der Längsachse ab. hierbei kann das Schraubelement besonders einfach hergestellt werden.

Gemäß einer weiteren Ausführungsform weist die Drehmomentbegrenzungseinheit eine Spannungsfeder auf, die zumindest abschnittsweise zwischen dem Betätigungsteil und dem Verbindungsteil angeordnet ist, um eine Vorspannung zwischen dem Verbindungsteil und dem Betätigungsteil zu erzeugen. Das Betätigungsteil kann so gegen die Federkraft der Spannungsfeder gedreht werden, um die Spannungsfeder weiter zu spannen.

Die Spannungsfeder kann hierfür an ihrem einen von dem Betätigungsteil abgewandten Ende von der Drehmomentbegrenzungseinheit gehalten werden, um beim Drehen des Betätigungsteils die Spannung der Spannungsfeder zu erhöhen. Steigt die Spannung über einen Grenzwert, kann sich dann beispielsweise das Betätigungsteil relativ zum Verbindungsteil drehen, um die Spannungsfeder wieder zu entspannen und zugleich ein Überdrehen des Verbindungsteils und damit des Schraubelements zu verhindern. Hierdurch können Beschädigungen an dem Schraubelement bzw. an dem Gegenstück reduziert oder sogar gänzlich vermieden werden.

Vorzugsweise liegt die Spannungsfeder an dem Beschränkungselement an.

Gemäß einer noch weiteren Ausführungsform ist die Spannungsfeder als eine Schraubenfeder, eine Tellerfeder, eine Spiralfeder, eine Bellevillefeder oder eine Blattfeder ausgebildet. Je nach Bedarf kann die entsprechende Feder gewählt werden.

Es kann bei einem Ausführungsbeispiel vorgesehen sein, dass die Drehmomentbegrenzungseinheit ein Mitnehmerelement aufweist, das zumindest abschnittsweise zwischen dem Verbindungsteil und dem Betätigungsteil anordenbar ist und eine Bewegung des Betätigungselements auf das Verbindungselement überträgt. Beim Bewegen bzw. Drehen des Betätigungsteils kann somit dessen Bewegung direkt oder indirekt auf das Verbindungsteil übertragen werden, sodass auch dieses sich bewegt bzw. dreht. Ebenso können durch das Mitnehmerelement das Betätigungsteil und das Verbindungsteil so lange fest miteinander verbunden werden, so lange das anliegende Drehmoment unter einem gewissen Grenzwert liegt, während bei einem (zu) hohen anliegenden Drehmoment eine Bewegung der beiden Komponenten relativ zueinander ermöglicht wird.

Es kann außerdem vorgesehen sein, dass das Mitnehmerelement zwischen Betätigungsteil und - falls vorhanden - Spannungsfeder angeordnet ist, um auch die Federkraft der Spannungsfeder zwischen Verbindungsteil und Betätigungsteil zu übertragen.

Eine weitere Ausführungsform sieht es vor, dass das Mitnehmerelement an zumindest einer Seite Mitnehmervorsprünge aufweist, die mit an dem Verbindungsteil vorgesehenen korrespondierenden Rücksprüngen in eine Wirkverbindung bringbar sind, insbesondere wobei sich die Mitnehmervorsprünge parallel zur Längsachse erstrecken. Das Mitnehmerelement kann zwischen Verbindungsteil und Betätigungsteil angeordnet sein, um die Übertragung der Bewegung des Betätigungsteils auf das Verbindungsteil zu unterstützen.

Das Mitnehmerelement kann hierfür beispielsweise an seiner von dem Gewinde abgewandten Seite die Mitnehmervorsprünge aufweisen, sodass sie mit den entsprechend korrespondierenden Rücksprüngen des Verbindungsteils in Wirkverbindung stehen. Die Mitnehmervorsprünge fixieren gemeinsam mit den korrespondierenden Rücksprüngen so lange das Verbindungsteil am Betätigungsteil, so lange das anliegende Drehmoment unter einem gewissen Schwellenwert liegt. Übersteigt das anliegende Drehmoment diesen Schwellenwert, kann sich das Betätigungsteil relativ zum Verbindungsteil drehen, wodurch die Mitnehmervorsprünge des Mitnehmerelements jeweils von einem Rücksprung in den benachbarten Rücksprung rutschen, um dort zunächst wieder zum Liegen zu kommen. Das Verbindungsteil bewegt sich bei diesem Vorgang nicht mehr weiter und verhindert damit ein Überdrehen des Schraubelements.

Gemäß einer weiteren Ausführungsform weist das Mitnehmerelement umfangsseitig Betätigungsvorsprünge auf, die mit an dem Betätigungsteil vorgesehenen korrespondierenden Aussparungen in eine Wirkverbindung bringbar sind, insbesondere wobei die Betätigungsvorsprünge sich radial zur Längsachse erstrecken. Die Betätigungsvorsprünge können mit dem Betätigungsteil im Wesentlichen dieselbe Wirkverbindung eingehen, wie beispielsweise die Mitnehmervorsprünge mit den Rücksprüngen des Verbindungsteils. Hierdurch wird sowohl die Übertragung der Bewegung des Betätigungsteils auf das Verbindungsteil unterstützt, als auch ein relatives Drehen zueinander ermöglicht, um das Schraubelement vor eventuellen Beschädigungen zu schützen.

Eine Ausführungsform sieht es auch vor, dass das Mitnehmerelement im Wesentlichen ringförmig ausgebildet ist. Somit kann das Mitnehmerelement beispielweise umfangsseitig um das Verbindungsteil angeordnet werden. Die eventuell vorhandenen Mitnehmer- bzw. Betätigungsvorsprünge können sich dann axial bzw. radial zum ringförmigen Mitnehmerelement bzw. zur Längsachse des Schraubelements erstrecken.

Es ist auch denkbar, dass das Verbindungsteil einen Flansch aufweist, der als Begrenzung für das Betätigungsteil dient und schließt somit das Betätigungsteil zu einer zweiten Seite in der axialen Richtung der Längsachse ab. Der Flansch kann beispielsweise an jener Seite des Verbindungsteils angeordnet sein, die von dem Gewinde abgewandt ist und gewissermaßen in Richtung des Anwenders zeigt, um dort als Begrenzung zu dienen. Prinzipiell ist es aber auch möglich, dass an beiden Endseiten des Verbindungsteils ein Flansch ausgebildet ist.

Eine Ausführungsform sieht es vor, dass der Flansch Rücksprünge aufweist, die insbesondere mit den Mitnehmervorsprüngen des Mitnehmerelements korrespondieren, insbesondere wobei die Rücksprünge sich parallel zur Längsachse erstrecken. Somit kann es beispielsweise ermöglicht werden, dass die Rücksprünge mit den Mitnehmervorsprüngen des Mitnehmerelements korrespondieren und mit den Rücksprüngen eine Wirkverbindung eingehen.

Gemäß einem Ausführungsbeispiel weist das Beschränkungselement im zusammengesetzten Zustand einen zumindest im Wesentlichen ringförmig ausgebildeten Außenumfang auf.

Gemäß einem weiteren Ausführungsbeispiel weist das Beschränkungselement im zusammengesetzten Zustand einen zumindest im Wesentlichen quadratisch ausgebildeten Innenumfang auf, um beispielsweise besser in die Nuten des Verbindungsteil zu passen. Diese können nämlich beispielsweise als abgeflachte Vertiefungen ausgebildet sein, sodass der Innenumfang des Beschränkungselements für eine optimale Passform auch flache Seiten benötigt.

Erfindungsgemäß weist das Beschränkungselement im zusammengesetzten Zustand eine, insbesondere durchgehende, Umfangsnut auf, in der ein Erkennungselement fixierbar ist. Das Erkennungselement kann beispielsweise als ein (farblich) codiertes Erkennungselement ausgebildet sein, damit ein Anwender zum Beispiel einfach erkennen kann, welches Schraubelement in welchen Anschluss gehört. Zusätzlich kann auch ein Halteelement vorgesehen sein, welches die Beschränkungselementteile im zusammengesetzten Zustand zusammen hält und fest fixiert. Es ist außerdem auch möglich, dass ein und dasselbe Element sowohl die Funktion eines Erkennungselements als auch eines Halteelementes übernimmt.

Erfindungsgemäß ist das Erkennungselement als ein Codierring ausgestaltet, der in die Umfangsnut eingebettet werden kann. Hierdurch kann das Erkennungselement auch zusätzlich einfach die Funktion des Halteelements übernehmen, da der Ring umfangsseitig um die zusammengesetzten Beschränkungselementteile angebracht wird und sie dadurch zusammen halten kann.

Ein noch weiteres Ausführungsbeispiel sieht es vor, dass die Beschränkungselementteile über eine Steckverbindung, eine Rastverbindung, eine Schraubverbindung, einer Nut und Federverbindung und/oder eine Klebverbindung und/oder ähnlichem miteinander verbunden sind, um eine einfache und zugleich zuverlässige Fixierung aneinander zu gewährleisten.

Gemäß einer Ausführungsvariante ist das Betätigungselement manuell betätigbar, um eine besonders leichte Handhabung zu gewährleisten.

Gemäß einer Ausführungsvariante ist das Betätigungsteil als eine Hülse ausgebildet, die ein Gehäuse für die Drehmomentbeschränkungseinheit bildet, wobei das Gehäuse an der ersten Seite durch das Beschränkungselement und an der zweiten Seite durch das Betätigungsteil abgeschlossen ist.

Gemäß einem weiteren Aspekt betrifft die vorliegende Erfindung ein System umfassend zumindest ein Schraubelement und eine an dem Schraubelement befestigte oder befestigbare Leitung, insbesondere eine flüssigkeitsführende Leitung, wobei das System auch einen Geräteanschluss für eine flüssigkeitsführende Vorrichtung mit der das Schraubelement kooperiert, umfassen kann.

Die Erfindung wird nachfolgend anhand von Ausführungsbeispielen unter Bezugnahme auf die Zeichnungen näher erläutert. In diesen zeigen:
- Fig. 1a und b:: ein erfindungsgemäßes Schraubelement mit bzw. ohne Betätigungsteil;
- Fig. 2:: eine Explosionsansicht eines erfindungsgemäßen Schraubelements;
- Fig. 3:: einen Querschnitt eines erfindungsgemäßen Schraubelements entlang der Schnittlinie A-A der Fig. 1b;
- Fig. 4:: einen Querschnitt eines erfindungsgemäßen Schraubelements entlang der Schnittlinie B-B der Fig. 3;
- Fig. 5:: einen Querschnitt eines erfindungsgemäßen Schraubelements entlang der Schnittlinie C-C der Fig. 3;
- Fig. 6a und b:: ein beispielhaftes Mitnehmerelement;
- Fig. 7a und b:: eine Seitenansicht bzw. einen Querschnitt eines beispielhaften Verbindungsteils;
- Fig. 8:: eine perspektivische Ansicht des Verbindungsteils aus Fig. 7;
- Fig. 9a und b:: verschiedene Querschnitte des Verbindungsteils aus Fig. 7;
- Fig. 10a und b:: verschiedene Querschnitte eines beispielhaften Betätigungsteils;
- Fig. 11a und b:: verschiedene perspektivische Ansichten eines beispielhaften Betätigungsteils;
- Fig. 12a und b:: eine perspektivische Ansicht sowie eine Seitenansicht eines beispielhaften Beschränkungselementteils; und
- Fig. 13: eine perspektivische Ansicht einer Leitung, die an einem Gehäuse mittels eines Schraubelements gemäß der Fig. 1 angeschlossen ist.

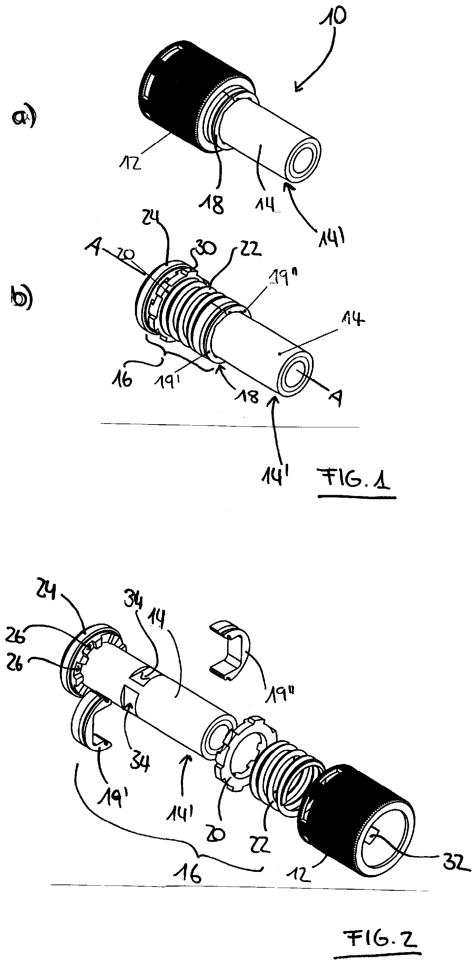

Die Figuren 1a und 1b zeigen beispielhaft ein erfindungsgemäßes Schraubelement 10, wobei in Fig. 1a das Schraubelement 10 mit Betätigungsteil 12 und Verbindungsteil 14 dargestellt ist. Während in Fig. 1b das Betätigungsteil 12 fehlt, damit die darunter liegende Drehmomentbeschränkungseinrichtung 16 mit ihrem Beschränkungselement 18, Mitnehmerelement 20 sowie Spannungsfeder 22 sichtbar ist.

Das Verbindungsteil 14 ist der Einfachheit halber ohne Gewinde dargestellt, weist aber in der Regel zumindest an seinem freien Ende 14' ein Gewinde auf, mit dem es in einen Anschluss eines Gerätes o. ä. geschraubt werden kann.

Das Verbindungsteil 14 ist außerdem im Wesentlichen als ein Hohlzylinder ausgebildet, an dessen einem Ende ein Flansch 24 ausgebildet ist, der Rücksprünge 26 aufweist. Der Flansch 24 dient sowohl als Begrenzung für das Betätigungsteil 12 als auch über seine Rücksprünge 26 als eine Verbindung zum Mitnehmerelement 20. Das Verbindungsteil 14 weist eine Längsachse A auf, die sich zwischen dem Flansch 24 und dem freien Ende 14' erstreckt.

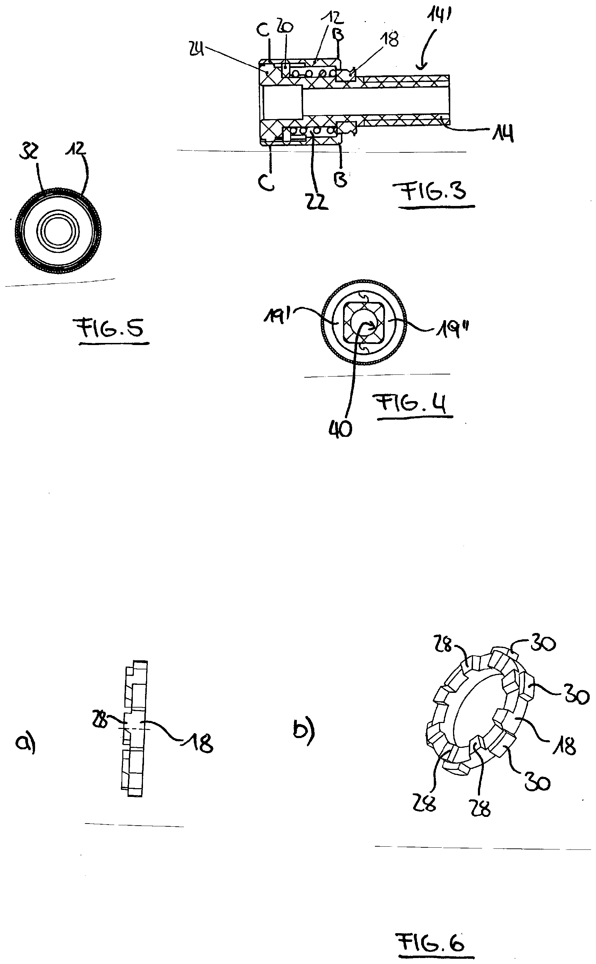

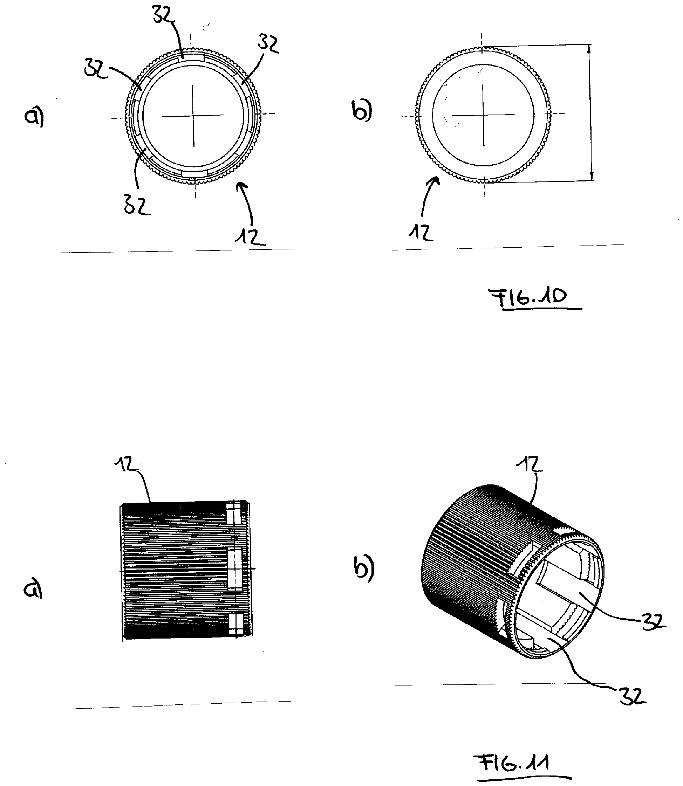

Das Mitnehmerelement 20 weist nämlich Mitnehmervorsprünge 28 auf (siehe auch Fig. 6a und b), welche mit den Rücksprüngen 26 am Flansch 24 korrespondieren und eine Wirkverbindung eingehen können. Zusätzlich weist das Mitnehmerelement 20 auch Betätigungsvorsprünge 30 auf, welche sich radial nach außen erstrecken. Diese Betätigungsvorsprünge 30 wirken wiederum mit den korrespondierenden Aussparungen 32 am Betätigungsteil 12 (siehe auch Fig. 11b) zusammen.

Somit dient das Mitnehmerelement 20 als Verbindung zwischen Verbindungsteil 14 und Betätigungsteil 12 und kann Bewegungen der einen Komponente jeweils auf die andere Komponente übertragen bzw. die beiden Komponenten aneinander fixieren. Gleichzeitig hält diese Fixierung aber nur so lange, solange ein gewisser Schwellenwert eines anliegenden Drehmoments nicht überschritten wird. Wird dieser Schwellenwert überschritten, kann das Mitnehmerelement 20 eine Bewegung zwischen dem Betätigungsteil 12 und dem Verbindungsteil 14 zulassen, indem die Vorsprünge 28, 30 um jeweils einen Rücksprung 26 bzw. Aussparung 32 weiterrutschen.

Der Schwellenwert für das anliegende Drehmoment wird unter anderem durch die Federkraft der Spannungsfeder 22 festgelegt. Diese Spannungsfeder 22, die zwischen Verbindungsteil 14 und Betätigungsteil 12 angeordnet ist, erzeugt nämlich eine Vorspannung zwischen den beiden Komponenten. Wird das Schraubelement 10 in einen Anschluss geschraubt und erreicht dort seine geometrischen Grenzen, kann das Betätigungsteil 12 weiter gegen die Federkraft der Spannungsfeder 22, die vom Beschränkungselement 18 begrenzt wird, gedreht werden, bis das Betätigungsteil 12 am Mitnehmerelement 20 nachgibt und um eine Position weiter rutscht und die Spannungsfeder 22 somit wieder in ihre Ausgangslage bringt.

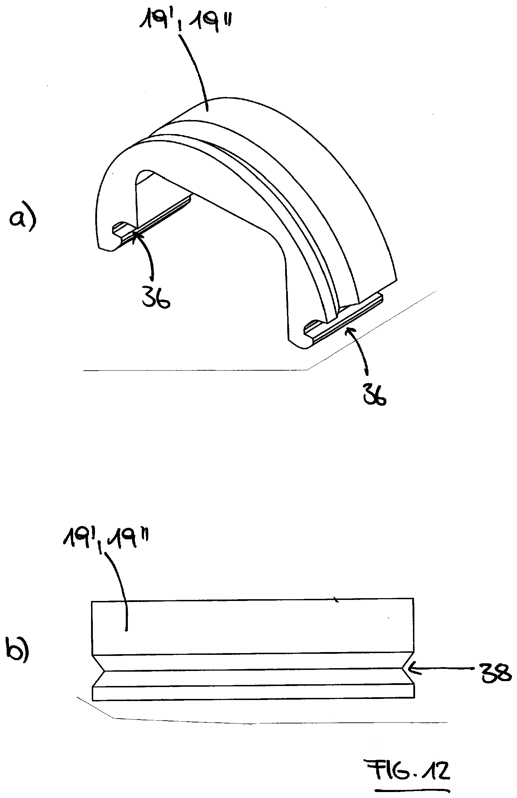

Das Beschränkungselement 18 ist in der gezeigten Ausführungsform aus zwei Beschränkungselementteilen 19', 19" zusammengesetzt (siehe Fig. 2 sowie 12a und b). Prinzipiell könnte das Beschränkungselement 18 aber auch aus mehreren Teilen bestehen. Die mehrteilige Ausgestaltung hat sich insbesondere dadurch als besonders vorteilhaft erwiesen, als dass das Beschränkungselement 18 als separate Komponente hergestellt werden kann, welche erst in einem weiteren Schritt an dem Verbindungsteil 14 befestigt wird, indem die verschiedenen Beschränkungselementteile 19', 19" einfach aneinander fixiert werden. Hierbei kann das Schraubelement einfach, zuverlässig und kostengünstig hergestellt werden.

Zur Befestigung bzw. Justage des Beschränkungselements 18 sind an dem Verbindungsteil 14 insgesamt vier Nuten 34 vorgesehen, die sich umfangsseitig um das Verbindungsteil 14 erstrecken. In diesen Nuten können die Beschränkungselementteile 19', 19" platziert werden, da diese in zusammengesetzter Form einen quadratischen Innenumfang 40 aufweisen (siehe insbesondere Fig. 4), welche mit den Nuten 34 des Verbindungsteils 14 korrespondieren.

In der dargestellten Ausführungsform (siehe hierzu auch Fig. 12a und b) sind die Beschränkungselementteile 19', 19" symmetrisch und komplementär zueinander ausgebildet und bilden in zusammengesetzter Form einen ringförmigen Außenumfang sowie einen quadratischen Innenumfang, um - wie bereits erwähnt - bündig in die dafür vorgesehenen Nuten 34 eingelegt werden zu können. Über eine Rastverbindung 36 können die beiden Beschränkungselementteile 19', 19" miteinander verbunden bzw. aneinander befestigt werden. Die Verbindung 36 muss nicht notwendigerweise eine Rastverbindung sein, sondern kann auch anders realisiert werden, wenn dies beispielsweise herstellungstechnisch einfacher und/oder günstiger ist. Die dargestellte Rastverbindung 36 ist lediglich beispielhafter Natur.

Der Außen- bzw. Innenumfang des zusammengesetzten Beschränkungselements 18 ist am Querschnitt entlang der Linie B-B der Fig. 3 in Fig. 4 deutlich zu erkennen. Die Fig. 5 zeigt einen weiteren Querschnitt (entlang der Schnittlinie C-C der Fig. 3) des Schraubelements 10, bei dem vor allem das Betätigungsteil 12 mit seinen Aussparungen 32 zu erkennen ist.

Außerdem weist das Beschränkungselement 18 in seiner zusammengesetzten Form eine Umfangsnut 38 auf, in welcher ein nicht dargestellter Codierring platziert werden kann. Der Codierring kann hierbei nicht nur als - beispielsweise farbliches - Erkennungsmerkmal für das Schraubelement, sondern auch als zusätzliche Fixierung für die beiden Beschränkungselementteile 19', 19" dienen. Da der Codierring nämlich um die zusammengesetzten Beschränkungselementteile 19', 19" platziert wird, kann dieser zusätzlich zur ohnehin vorhandenen Rastverbindung 36 die beiden Teile 19', 19" zusammen halten.

Ein beispielhaftes Beschränkungselementteil 19', 19" ist in den Figuren 12a und 12b dargestellt. Die Umfangsnut 38, der ringförmige Außenumfang sowie der eckige Innenumfang 40 sind in diesen Figuren deutlich zu erkennen.

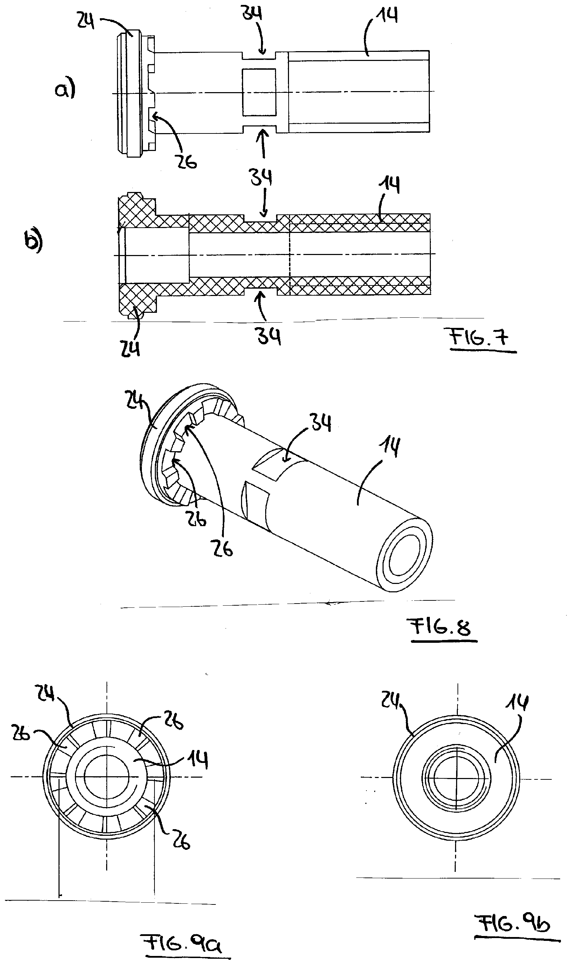

Die erfindungsgemäße Nut 38 des Verbindungsteils 14, in der das Beschränkungselement 18 platziert ist, ist außerdem deutlich in den Figuren 7a und b, sowie Fig. 8 zu erkennen. Es könnte sich prinzipiell auch um 2 Nuten, mehr als 4 Nuten oder auch um nur eine durchgehende Umfangsnut handeln. Dies kann je nach Ausgestaltung des Beschränkungselements 18 bedarfsgerecht gewählt und ausgestaltet werden.

Die Figuren 9a und 9b zeigen zusätzlich zwei Querschnitte des Verbindungsteils 14 in unterschiedlichen Ebenen, bei denen die Ausgestaltungen des Flansches 24 bzw. der Rücksprünge 26 erkennbar sind.

Verschiedene Querschnitte und Ansichten des Betätigungsteils 12 sind hingegen in den Figuren 10a und 10b bzw. 11a und 11b dargestellt. In den beiden Ansichten der Figuren 11a und b ist deutlich zu erkennen, dass das Betätigungsteil 12 eine gerillte bzw. geriffelte Oberfläche aufweist. Diese stellt kein technisch notwendiges Merkmal dar, hat sich aber in der Praxis als besonders vorteilhaft erwiesen, da sich die Griffigkeit für den Anwender somit verbessert. Das erfindungsgemäße Schraubelement 10 hat sich nämlich u.a. als besonders einfach zu handhaben erwiesen, da es vom Anwender manuell betätigt werden kann und keine speziellen Werkzeuge notwendig sein. Die Griffigkeit des Betätigungsteils 12 kann prinzipiell aber auch über andere Ausgestaltungen und Methoden verbessert werden.

Außerdem sind in den Figuren 11b und 10a die Aussparungen 32 des Betätigungsteils 12 zu sehen. welche im zusammengesetzten Zustand mit den Betätigungsvorsprüngen 30 des Mitnehmerelements 20 in Verbindung stehen. Fig. 10b zeigt einen Querschnitt des Betätigungsteils 12 an einer Ebene des Betätigungsteils 12, bei der keine Aussparungen 32 mehr vorhanden sind. In der gezeigten Ausführungsform ziehen sich die Aussparungen 32 nämlich nicht über die gesamte Länge des Betätigungsteils 12, sondern nur über einen für das Mitnehmerelement 20 relevanten Teil. Generell könnten sich aber die Aussparungen auch über die gesamte Länge des Betätigungsteils 12 erstrecken.

Bei der Anwendung des erfindungsgemäßen Schraubelements 10 wird also im Wesentlichen durch Betätigung bzw. Drehen des Betätigungsteils 12 das Verbindungsteil 14 in einen Anschluss geschraubt. Das Verbindungsteil 14 kann so weit in einen Anschluss geschraubt werden, soweit es das (nicht dargestellte) Gewinde zulässt. Damit ein Anwender das Schraubelement 10 nicht darüber hinaus schraubt und damit das Gewinde und/oder den Anschluss beschädigt, ist zwischen dem Verbindungsteil 14 und dem Betätigungsteil 12 eine Drehmomentbeschränkungseinheit 16 vorgesehen.

Die Drehmomentbeschränkungseinheit setzt sich aus einem mehrteiligen Beschränkungselement 18, einem Mitnehmerelement 20 und einer Spannungsfeder 22 zusammen. Das im Wesentlichen ringförmige Beschränkungselement 18 ist hierbei aus zwei Beschränkungselementteilen 19', 19" zusammengesetzt und in entsprechenden Nuten 34 am Verbindungsteil 14 befestigt. Das Mitnehmerelement 20 ist ebenfalls im Wesentlichen ringförmig ausgebildet und um das Verbindungsteil 14, zwischen Beschränkungselement 18 und Flansch 24 angeordnet.

Zusätzlich weist das Mitnehmerelement 20 Mitnehmervorsprünge 28 sowie Betätigungsvorsprünge 30 auf, welche mit entsprechend korrespondierenden Rücksprüngen 26 am Verbindungsteil 14 bzw. Aussparungen 32 am Betätigungsteil 12 zusammenwirken. Somit kann beim Betätigen des Betätigungsteils 12 dessen Bewegung auf das Verbindungsteil 14 übertragen werden. Gleichzeitig ist diese Verbindung aber derart lösbar, dass ein Überdrehen des Schraubelements 10 vermieden werden kann. Bevor ein Überdrehen nämlich überhaupt stattfinden kann, gibt diese Verbindung zwischen Mitnehmerelement 20, Verbindungsteil 14 und Betätigungsteil 12 nach und die Vorsprünge 28, 30 des Mitnehmerelements 20 rutschen jeweils um einen Rücksprung 26 bzw. eine Aussparung 32 weiter, sodass eine Rotation des Betätigungsteils 12 relativ zum Verbindungsteil 14 stattfindet, wobei das Verbindungsteil 14 sich nicht bewegt.

Zusätzlich ist zwischen Verbindungsteil 14 und Betätigungsteil 12 eine Spannungsfeder 22 vorgesehen, welche die beiden Teile 12, 14 gegeneinander vorspannt. Die Federkraft dieser Spannungsfeder 22 kann dann im Wesentlichen den Grenzwert für das anliegende Drehmoment festlegen, bei dem die Drehmomentbeschränkungseinheit 16 auslöst und eine Bewegung des Betätigungsteils 12 relativ zum Verbindungsteil 14 zulässt. Das Betätigungsteil 12 kann nämlich gegen die Federkraft der Spannungsfeder 22 weiter gedreht werden. Sobald der Schwellenwert des anliegenden Drehmoments erreicht ist, löst die Drehmomentbeschränkungseinheit 16 aus, sodass sich die Spannungsfeder 22 wieder entspannt und in ihre Ausgangslage zurückkehrt.

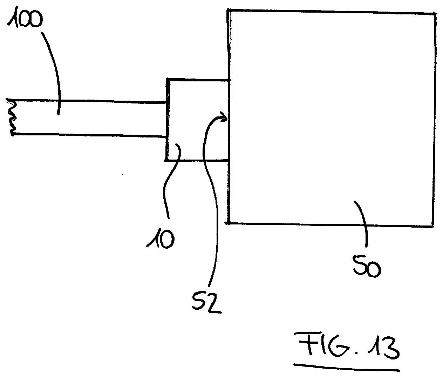

Fig. 13 zeigt eine perspektivische Ansicht einer Leitung 100, die an einem Gehäuse 50 mittels des Schraubelements 10 angeschlossen ist. Hierfür ist das Schraubelement 10 an einem Geräteanschluss 52, bspw. in Form eines Innengewindes, des Gehäuses 50 angeschlossen. Die Leitung 100 ist eine zur Führung von Flüssigkeiten ausgebildete Leitung mittels derer Flüssigkeiten zu oder von dem Gehäuse 50 geleitet werden können. Das Gehäuse 50 kann bspw. ein Säule die in der Chromatographie eingesetzt wird umfassen, zu der bzw. von der eine Flüssigkeit mittels der Leitung 100 geführt wird. Das Gehäuse 50 kann im Prinzip jede Art von flüssigkeitsführende Vorrichtung umfassen, zu der bzw. von der eine Flüssigkeit geführt werden muss.

Die Leitung 100 kann auch mittels des Schraubelements 10 und einer nicht gezeigten Kopplung mit einer weiteren Leitung verbunden werden.

### Bezugszeichen

- 10: Schraubelement
- 12: Betätigungsteil
- 14: Verbindungsteil
- 14': freies Ende
- 16: Drehmomentbeschränkungseinheit
- 18: Beschränkungselement
- 19', 19": Beschränkungselementteil
- 20: Mitnehmerelement
- 22: Spannungsfeder
- 24: Flansch
- 26: Rücksprünge
- 28: Mitnehmervorsprünge
- 30: Betätigungsvorsprünge
- 32: Aussparungen
- 34: Nut
- 36: Rastverbindung
- 38: Umfangsnut
- 40: Innenumfang
- 50: Gehäuse
- 52: Geräteanschluss
- 100: Leitung

- A: Längsachse

## Patentansprüche

1. Schraubelement mit einer internen Drehmomentbegrenzung zum Befestigen einer Leitung, insbesondere einer flüssigkeitsführenden Leitung, an einem Gegenstück, insbesondere an einem Geräteanschluss oder einer Kopplung für eine weitere Leitung, mit
einem, vorzugsweise ein Gewinde aufweisendes, Verbindungsteil (14) und einem Betätigungsteil (12), und
mit einer Drehmomentbeschränkungseinheit (16), die ein von dem Betätigungsteil (12) auf das Verbindungsteil (14) übertragbares Drehmoment beschränkt, wobei die Drehmomentbeschränkungseinheit (16) zwischen dem Verbindungsteil (14) und dem Betätigungsteil (12) angeordnet ist und ein, aus zwei miteinander verbindbaren Beschränkungselementteilen (19', 19") zusammensetzbares, separates Beschränkungselement (18) aufweist, das die Drehmomentbeschränkungseinheit (16) in axialer Richtung einer Längsachse (A) des Schraubelements (10) begrenzt,
wobei das Verbindungsteil (14) und das Betätigungssteil (12) um die Längsachse des Schraubelements drehbar sind, jedoch über eine Verbindungsstelle axial miteinander verbunden, sodass das gesamte Schraubelement um die Längsachse drehbar ist und die Drehbewegung auf das Verbindungsteil (14) übertragbar ist, wobei die axiale Verbindung das Betätigungsteil (12) und das Verbindungsteil (14) beieinander hält, solange das anliegende Drehmoment einen Grenzwert nicht überschreitet, wobei die axiale Verbindung getrennt wird, sobald der Grenzwert überschritten wird, wodurch das Betätigungsteil (12) relativ zum Verbindungsteil (14) rotierbar ist,
**dadurch gekennzeichnet, dass**
das Beschränkungselement (18) im zusammengesetzten Zustand eine, insbesondere durchgehende, Umfangsnut (38) aufweist, in der ein Erkennungselement fixierbar ist, wobei das Erkennungselement als ein Codierring ausgestaltet ist, der in die Umfangsnut (38) eingebettet werden kann.

2. Schraubelement nach Anspruch 1,
wobei das Beschränkungselement (18) in zumindest einer am Verbindungsteil (14) vorgesehenen Nut (34), bevorzugt in zwei bis sechs Nuten (34), besonders bevorzugt in vier Nuten (34), insbesondere lösbar oder unlösbar, zusammengesetzt ist.

3. Schraubelement nach Anspruch 1 oder 2,
wobei die Drehmomentbeschränkungseinheit (16) in dem Betätigungsteil (12) angeordnet ist und das Beschränkungselement (18) das Betätigungsteil (12) zu einer ersten Seite in der axialen Richtung der Längsachse (A) abschließt.

4. Schraubelement nach zumindest einem der vorstehenden Ansprüche,
wobei die Drehmomentbegrenzungseinheit (16) eine Spannungsfeder (22) aufweist, die zumindest abschnittsweise zwischen dem Betätigungsteil (18) und dem Verbindungsteil (14) angeordnet ist, um eine Vorspannung zwischen dem Verbindungsteil (14) und dem Betätigungsteil (12) zu erzeugen, insbesondere wobei die Spannungsfeder (22) an dem Beschränkungselement (18) anliegt.

5. Schraubelement nach Anspruch 4,
wobei die Spannungsfeder (22) als eine Schraubenfeder, eine Tellerfeder, eine Spiralfeder, eine Bellevillefeder oder eine Blattfeder ausgebildet ist.

6. Schraubelement nach zumindest einem der vorstehenden Ansprüche, wobei die Beschränkungselementteile (19', 19") über eine Steckverbindung, eine Rastverbindung (36), eine Schraubverbindung, eine Nut und Federverbindung und/oder eine Klebverbindung miteinander verbunden sind.

7. Schraubelement nach zumindest einem der vorstehenden Ansprüche, wobei die Drehmomentbegrenzungseinheit (16) ein Mitnehmerelement (20) aufweist, das zumindest abschnittsweise zwischen dem Verbindungsteil (14) und dem Betätigungsteil (12) anordenbar ist und eine Bewegung des Betätigungsteils (12) auf das Verbindungsteil (14) überträgt.

8. Schraubelement nach Anspruch 7,
wobei das Mitnehmerelement (20) an zumindest einer Seite Mitnehmervorsprünge (28) aufweist, die mit an dem Verbindungsteil (14) vorgesehenen korrespondierenden Rücksprüngen (26) in eine Wirkverbindung bringbar sind, insbesondere wobei sich die Mitnehmervorsprünge (28) parallel zur Längsachse erstrecken.

9. Schraubelement nach Anspruch 7 oder 8,
wobei das Mitnehmerelement (20) umfangsseitig Betätigungsvorsprünge (30) aufweist, die mit an dem Betätigungsteil (12) vorgesehenen korrespondierenden Aussparungen (32) in eine Wirkverbindung bringbar sind, insbesondere wobei die Betätigungsvorsprünge (30) sich radial zur Längsachse erstrecken, insbesondere wobei das Mitnehmerelement (20) im Wesentlichen ringförmig ausgebildet ist.

10. Schraubelement nach zumindest einem der vorstehenden Ansprüche, wobei das Verbindungsteil (14) einen Flansch (24) aufweist, der als Begrenzung für das Betätigungsteil (12) dient und das Betätigungsteil (12) zu einer zweiten Seite in der axialen Richtung der Längsachse (A) abschließt.

11. Schraubelement nach Anspruch 10, insbesondere nach Anspruch 8, wobei der Flansch (24) Rücksprünge (28) aufweist, die insbesondere mit den Mitnehmervorsprüngen (28) des Mitnehmerelements (20) korrespondieren, insbesondere wobei die Rücksprünge (28) sich parallel zur Längsachse erstrecken.

12. Schraubelement nach zumindest einem der vorstehenden Ansprüche, wobei das Beschränkungselement (18) im zusammengesetzten Zustand einen zumindest im Wesentlichen ringförmig ausgebildeten Außenumfang aufweist.

13. Schraubelement nach zumindest einem der vorstehenden Ansprüche, wobei das Beschränkungselement (18) im zusammengesetzten Zustand einen zumindest im Wesentlichen quadratisch ausgebildeten Innenumfang (40) aufweist.

14. Schraubelement nach zumindest einem der vorstehenden Ansprüche, wobei das Betätigungsteil (12) manuell betätigbar ist; und/oder wobei das Betätigungsteil (12) als eine Hülse ausgebildet ist, die ein Gehäuse für die Drehmomentbeschränkungseinheit (16) bildet, wobei das Gehäuse an der ersten Seite durch das Beschränkungselement (18) und an der zweiten Seite durch das Betätigungsteil (12) abgeschlossen ist.

15. System umfassend zumindest ein Schraubelement (10) gemäß zumindest einem der vorstehenden Ansprüche und einer an dem Schraubelement (10) befestigten oder befestigbare Leitung (100), insbesondere eine flüssigkeitsführende Leitung, insbesondere wobei das System einen Geräteanschluss (52) für eine flüssigkeitsführende Vorrichtung, mit der das Schraubelement kooperiert, aufweist.

## Claims

1. A screw element comprising an internal torque limitation for fastening a line, in particular a liquid-conducting line, to a counter-piece, in particular to a device connector or to a coupling for a further line, said screw element having
a connection part (14), which preferably has a thread, and an actuation part (12); and
having a torque limiting unit (16) which limits a torque that can be transmitted from the actuation part (12) to the connection part (14), wherein the torque limiting unit (16) is arranged between the connection part (14) and the actuation part (12) and has a separate limiting element (18) which can be assembled from two limiting element parts (19', 19") connectable to one another and which limits the torque limiting unit (16) in an axial direction of a longitudinal axis (A) of the screw element (10),
wherein the connection part (14) and the actuation part (12) are rotatable about the longitudinal axis of the screw element, but are axially connected to one another via a connection point so that the entire screw element can be rotated about the longitudinal axis and the rotary movement can be transmitted to the connection part (14), wherein the axial connection keeps the actuation part (12) and the connection part (14) beside one another as long as the applied torque does not exceed a limit value, wherein the axial connection is disconnected as soon as the limit value is exceeded, whereby the actuation part (12) is rotatable relative to the connection part (14), **characterized in that**,
in the assembled state, the limiting element (18) has a peripheral groove (38), in particular a throughgoing peripheral groove (38), in which a recognition element can be fixed, with the recognition element being designed as a coding ring which can be embedded in the peripheral groove (38).

2. A screw element according to claim 1,
wherein the limiting element (18) is assembled, in particular releasably or non-releasably assembled, in at least one groove (34) provided at the connection part (14), preferably in two to six grooves (34), particularly preferably in four grooves (34).

3. A screw element according to claim 1 or 2,
wherein the torque limiting unit (16) is arranged in the actuation part (12) and the limiting element (18) terminates the actuation part (12) toward a first side in the axial direction of the longitudinal axis (A).

4. A screw element according to at least one of the preceding claims,
wherein the torque limiting unit (16) has a tension spring (22) which is at least sectionally arranged between the actuation part (18) and the connection part (14) to produce a preload between the connection part (14) and the actuation part (12), in particular wherein the tension spring (22) contacts the limiting element (18).

5. A screw element according to claim 4,
wherein the tension spring (22) is configured as a helical spring, a plate spring, a spiral spring, a Belleville spring or a leaf spring.

6. A screw element according to at least one of the preceding claims,
wherein the limiting element parts (19', 19") are connected to one another via a plug-in connection, a snap-in connection (36), a screw connection, a tongue and groove connection and/or an adhesive connection.

7. A screw element according to at least one of the preceding claims,
wherein the torque limiting unit (16) has an entrainment element (20) which can be at least sectionally arranged between the connection part (14) and the actuation part (12) and which transmits a movement of the actuation part (12) to the connection part (14).

8. A screw element according to claim 7,
wherein the entrainment element (20) has, at at least one side, entrainment projections (28) which can be brought into an operative connection with corresponding recesses (26) provided at the connection part (14), in particular wherein the entrainment projections (28) extend in parallel with the longitudinal axis.

9. A screw element according to claim 7 or 8,
wherein the entrainment element (20) has, at a peripheral side, actuation projections (30) which can be brought into an operative connection with corresponding cutouts (32) provided at the actuation part (12), in particular wherein the actuation projections (30) extend radially to the longitudinal axis, in particular wherein the entrainment element (20) is substantially annular.

10. A screw element according to at least one of the preceding claims,
wherein the connection part (14) has a flange (24) which serves as a boundary for the actuation part (12) and which terminates the actuation part (12) toward a second side in the axial direction of the longitudinal axis (A).

11. A screw element according to claim 9, in particular according to claim 8, wherein the flange (24) has recesses (28) which in particular correspond to the entrainment projections (28) of the entrainment element (20), in particular wherein the recesses (28) extend in parallel with the longitudinal axis.

12. A screw element according to at least one of the preceding claims,
wherein the limiting element (18) has an at least substantially annular outer periphery in an assembled state.

13. A screw element according to at least one of the preceding claims,
wherein the limiting element (18) has an at least substantially square inner periphery (40) in the assembled state.

14. A screw element according to at least one of the preceding claims,
wherein the actuation part (12) is manually actuable; and/or wherein the actuation part (12) is configured as a sleeve which forms a housing for the torque limiting unit (16), wherein the housing is terminated at the first side by the limiting element (18) and is terminated at the second side by the actuation part (12).

15. A system comprising at least one screw element (10) according to at least one of the preceding claims and a line (100), in particular a liquid-conducting line, fastened or fastenable to the screw element (10), in particular wherein the system has a device connector (52) for a liquid-conducting apparatus with which the screw element cooperates.

## Revendications

1. Elément à visser assurant une limitation interne du couple de rotation, destiné à fixer une conduite, en particulier une conduite menant un liquide, à une contre-pièce, en particulier à un raccord d'appareil ou à un couplage vers une autre conduite, comprenant
une partie de liaison (14), présentant de préférence un filetage, et une partie d'actionnement (12), et
une unité de restriction de couple (16) qui restreint un couple de rotation transmissible de la partie d'actionnement (12) à la partie de liaison (14), l'unité de restriction de couple (16) étant disposée entre la partie de liaison (14) et la partie d'actionnement (12) et présentant un élément de restriction séparé (18) qui peut être assemblé de deux parties d'élément de restriction (19', 19") aptes à être reliées entre elles et qui délimite l'unité de restriction de couple (16) dans la direction axiale d'un axe longitudinal (A) de l'élément à visser (10),
dans lequel la partie de liaison (14) et la partie d'actionnement (12) peuvent tourner autour de l'axe longitudinal de l'élément à visser, mais sont reliées axialement l'une à l'autre par un emplacement de liaison, de sorte que l'ensemble de l'élément à visser peut tourner autour de l'axe longitudinal et que le mouvement de rotation est transmissible à la partie de liaison (14), la liaison axiale maintenant assemblées la partie d'actionnement (12) et la partie de liaison (14) tant que le couple de rotation appliqué ne dépasse pas une valeur limite, la liaison axiale étant séparée dès que la valeur limite est dépassée, moyennant quoi la partie d'actionnement (12) est rotative par rapport à la partie de liaison (14),
**caractérisé en ce que**
l'élément de restriction (18) présente, à l'état assemblé, une rainure périphérique (38), en particulier continue, dans laquelle peut être fixé un élément de reconnaissance, l'élément de reconnaissance étant conçu comme un anneau de codage qui peut être encastré dans la rainure périphérique (38).

2. Elément à visser selon la revendication 1,
dans lequel l'élément de restriction (18) est assemblé, en particulier de manière amovible ou non, dans au moins une rainure (34) prévue sur la partie de liaison (14), de préférence dans deux à six rainures (34), de manière particulièrement préférée dans quatre rainures (34).

3. Elément à visser selon la revendication 1 ou 2,
dans lequel l'unité de restriction de couple (16) est disposée dans la partie d'actionnement (12), et l'élément de restriction (18) ferme la partie d'actionnement (12) vers un premier côté dans la direction axiale de l'axe longitudinal (A).

4. Elément à visser selon l'une au moins des revendications précédentes, dans lequel l'unité de limitation de couple (16) comprend un ressort de contrainte (22) disposé au moins localement entre la partie d'actionnement (18) et la partie de liaison (14) afin de générer une précontrainte entre la partie de liaison (14) et la partie d'actionnement (12), en particulier le ressort de contrainte (22) étant en appui contre l'élément de restriction (18).

5. Elément à visser selon la revendication 4,
dans lequel le ressort de contrainte (22) est conçu comme un ressort hélicoïdal, un ressort à disque, un ressort spiral, un ressort Belleville ou un ressort à lame.

6. Elément à visser selon l'une au moins des revendications précédentes, dans lequel les parties d'élément de restriction (19', 19") sont reliées entre elles par une liaison par enfichage, une liaison par encliquetage (36), une liaison par vissage, une liaison par rainure et languette et/ou une liaison par collage.

7. Elément à visser selon l'une au moins des revendications précédentes, dans lequel l'unité de limitation de couple (16) comprend un élément entraîneur (20) qui peut être disposé au moins localement entre la partie de liaison (14) et la partie d'actionnement (12) et qui transmet un mouvement de la partie d'actionnement (12) à la partie de liaison (14).

8. Elément à visser selon la revendication 7,
dans lequel l'élément entraîneur (20) présente, sur au moins un côté, des saillies d'entraînement (28) qui peuvent être amenées en liaison active avec des parties en retrait (26) correspondantes prévues sur la partie de liaison (14), en particulier les saillies d'entraînement (28) s'étendant parallèlement à l'axe longitudinal.

9. Elément à visser selon la revendication 7 ou 8,
dans lequel l'élément entraîneur (20) présente, sur sa périphérie, des saillies d'actionnement (30) qui peuvent être amenées en liaison active avec des évidements (32) correspondants prévus sur la partie d'actionnement (12), en particulier les saillies d'actionnement (30) s'étendant radialement par rapport à l'axe longitudinal, en particulier l'élément entraîneur (20) étant réalisé sensiblement en forme d'anneau.

10. Elément à visser selon l'une au moins des revendications précédentes, dans lequel la partie de liaison (14) comprend une bride (24) qui sert de délimitation à la partie d'actionnement (12) et qui ferme la partie d'actionnement (12) vers un deuxième côté dans la direction axiale de l'axe longitudinal (A).

11. Elément à visser selon la revendication 10, en particulier selon la revendication 8,
dans lequel la bride (24) présente des parties en retrait (28) qui correspondent en particulier aux saillies d'entraînement (28) de l'élément entraîneur (20), en particulier les parties en retrait (28) s'étendant parallèlement à l'axe longitudinal.

12. Elément à visser selon l'une au moins des revendications précédentes, dans lequel l'élément de restriction (18) présente, à l'état assemblé, une périphérie extérieure de forme au moins sensiblement annulaire.

13. Elément à visser selon l'une au moins des revendications précédentes, dans lequel l'élément de restriction (18) présente, à l'état assemblé, une périphérie intérieure (40) de forme au moins sensiblement carrée.

14. Elément à visser selon l'une au moins des revendications précédentes, dans lequel la partie d'actionnement (12) peut être actionnée manuellement ; et/ou la partie d'actionnement (12) est réalisée sous la forme d'un manchon qui forme un boîtier pour l'unité de restriction de couple (16), le boîtier étant fermé sur le premier côté par l'élément de restriction (18) et sur le deuxième côté par la partie d'actionnement (12).

15. Système comprenant au moins un élément à visser (10) selon l'une au moins des revendications précédentes et une conduite (100), en particulier une conduite menant un liquide, fixée ou susceptible d'être fixée à l'élément à visser (10), en particulier le système présentant un raccord d'appareil (52) pour un dispositif menant un liquide, avec lequel l'élément à visser coopère.
